# FASCICULE DE BREVET EUROPEEN

(11) **EP 3 160 682 B1**
(45) Date de publication et mention de la délivrance du brevet: **31.01.2018**
(21) Numéro de dépôt: 15745519.7
(22) Date de dépôt: 19.06.2015
(51) Int. Cl.: B23P 11/00, F23R 3/00, F23R 3/06, F23R 3/60, F23R 3/46

(54) **ENSEMBLE POUR CHAMBRE DE COMBUSTION DE TURBOMACHINE COMPRENANT UN BOSSAGE ET UN ÉLÉMENT ANNULAIRE**
ANORDNUNG FÜR TURBOMASCHINENBRENNKAMMER MIT EINER NABE UND EINEM RINGFÖRMIGEN ELEMENT
ASSEMBLY FOR TURBOMACHINE COMBUSTION CHAMBER COMPRISING A BOSS AND AN ANNULAR ELEMENT

(30) Priorité: 24.06.2014 FR 1455862
(43) Date de publication de la demande: 03.05.2017
(73) Titulaire: Safran Helicopter Engines, 64510 Bordes (FR)
(72) Inventeur: NAUDOT, Ludovic, André, Jöel, F-64510 Angaïs (FR); OLHARAN, Philippe, F-64000 Pau (FR); MENET-HAURE, Jean, F-64160 Saint Laurent Bretagne (FR)
(74) Mandataire: Regimbeau
(86) Numéro de dépôt international: PCT/FR2015/051633
(87) Numéro de publication internationale: WO 2015/197954

(56) Documents cités:
- EP-A1- 0 506 516
- EP-A1- 1 265 037
- EP-A1- 1 489 360
- EP-A2- 2 527 740
- EP-A2- 2 657 606
- FR-A1- 2 826 102
- FR-A1- 2 996 289

## Description

### DOMAINE TECHNIQUE GENERAL

L'invention concerne de manière générale le domaine des chambres de combustion pour des turbomachines, et plus particulièrement la fixation d'un tube à flamme dans une chambre de combustion d'une turbomachine.

Un ensemble pour chambre de combustion de turbomachine et un procédé pour la fabrication d'une chambre de combustion de turbomachine selon le préambule de la revendication 1 et de la revendication 8 respectivement sont connues du document EP 2 527 740 A2.

### ETAT DE L'ART

Une turbomachine comprend généralement, d'amont en aval, dans le sens d'écoulement des gaz, une soufflante, un ou plusieurs étages de compresseurs, par exemple un compresseur haute pression et un compresseur basse pression, une chambre de combustion, un ou plusieurs étages de turbine, par exemple une turbine haute pression et une turbine basse pression, et une tuyère d'échappement des gaz.

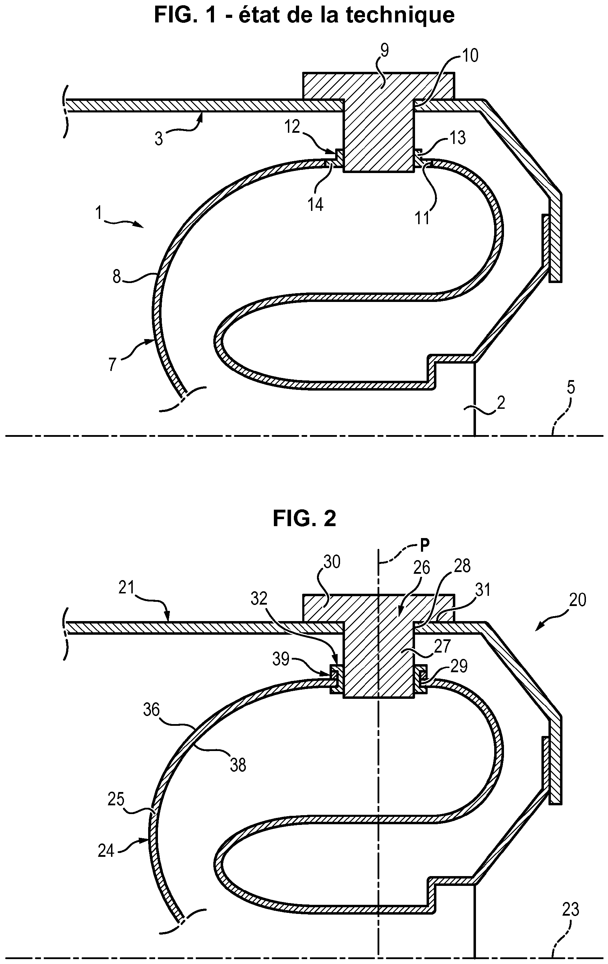

La figure 1 illustre une vue en coupe longitudinale d'une chambre à combustion 1 selon l'art antérieur.

La chambre de combustion 1 est connectée en amont à un compresseur (non représenté) qui alimente la chambre de combustion 1 en air sous pression par l'intermédiaire d'un diffuseur (non représenté), et en aval à un distributeur 2.

La chambre de combustion 1 est délimitée par un carter externe 3 annulaire s'étendant selon un axe longitudinal 5. Le carter externe 3 est fixé sur une enveloppe externe de la turbomachine (non représentée).

La chambre de combustion 1 comprend un « tube à flamme » ou « foyer » 7 qui est le siège de la combustion des gaz.

Le tube à flamme 7 est entouré par un conduit annulaire d'alimentation en air qui est séparé du tube à flamme 7 par une paroi 8 de forme globalement toroïdale.

Dans l'exemple illustré à la figure 1, le tube à flamme 7 est à « écoulement inversé », et la paroi 8 présente une forme annulaire coudée permettant de renvoyer l'écoulement gazeux en aval de la turbomachine, en direction de la turbine. L'écoulement des gaz se fait alors successivement de l'aval vers l'amont puis à nouveau vers l'aval de la chambre de combustion 1. Les injecteurs sont alors généralement agencés au niveau de la tête du tube à flamme 7.

Le tube à flamme 7 est relié à la chambre de combustion 1 par des axes de fixation 9 s'étendant chacun radialement dans un orifice traversant d'insertion 10 ménagé dans le carter externe 3, et dans un orifice traversant de réception 11 ménagé dans la paroi 8 du tube à flamme 7 en regard de l'orifice d'insertion 10. Ces axes de fixation 9 permettent de tenir le tube à flamme 7 au sein de la chambre de combustion 1.

Les orifices de réception 11 sont chacun munis d'un bossage 12 présentant un corps tubulaire 13 à l'intérieur duquel l'axe de fixation 9 associé est monté coulissant de sorte que, lorsque le tube à flamme 7 se dilate en raison de la chaleur due à la combustion des gaz, le corps 13 du bossage 12 coulisse le long de l'axe de fixation 9. Chacun des bossages 12 comprend en outre, à l'une de ses extrémités, une collerette annulaire 14 soudée en TIG (en anglais « *Tungsten Inert Gas* ») bord à bord étanche avec l'orifice de réception 11 de la paroi 8 du tube à flamme 7.

L'utilisation de tels bossages 12 présente cependant un certain nombre d'inconvénients.

En particulier, l'opération de soudure des bossages 12 à la paroi 8 du tube à flamme 7 génère de fortes déformations des bossages 12 et de la paroi 8 du tube à flamme 7, rendant nécessaire, après l'opération de soudure, des opérations de chaudronnerie et une reprise de l'usinage des corps 13 des bossages 12, de sorte à assurer un positionnement précis du tube à flamme 7 relativement au carter externe 3.

Par ailleurs, la collerette annulaire 14 des bossages 12 est globalement plane, et s'adapte difficilement au galbe de la paroi 8 du tube à flamme 7, de sorte que les bossages 12 ne permettent pas s'assurer un positionnement précis du tube à flamme 7 relativement au carter externe 3, sans une reprise de l'usinage des corps 13 des bossages 12.

De plus, il est obligatoire après l'opération de soudure de réaliser un traitement thermique et un contrôle non destructif des bossages 12 et du tube à flamme 7.

Ces opérations supplémentaires compliquent considérablement la fabrication de la chambre de combustion 1 et la rendent plus couteuse.

Enfin, les frottements générés entre les corps 13 des bossages 12 et les axes de fixation 9, lorsque le tube à flamme 7 se dilate en raison de la chaleur de la combustion des gaz et que les corps 13 des bossages 12 coulissent le long des axes de fixation 9, ont tendance à user les bossages 12.

Les bossages usagés 12 sont remplacés lors des opérations de maintenance. Les bossages usagées 12 sont par exemple découpés au laser, puis de nouveaux bossages 12 sont positionnés et soudés aux orifices de réception 11 de la paroi 8 du tube à flamme 7. Il est alors de nouveau nécessaire de réaliser des opérations de chaudronnerie sur le tube à flamme 7 et les nouveaux bossages 12, une reprise de l'usinage des corps 13 des nouveaux bossages 12, un traitement thermique et un contrôle non destructif des nouveaux bossages 12 et du tube à flamme 7.

Le remplacement de tels bossages 12 est donc particulièrement contraignant et coûteux.

### PRESENTATION DE L'INVENTION

La présente invention a donc pour objet de pallier les inconvénients précédemment cités en proposant un ensemble pour chambre de combustion comprenant un bossage et un élément annulaire permettant d'assurer un positionnement précis du tube à flamme dans la chambre de combustion, tout en réduisant la complexité et les coûts de fabrication de la chambre de combustion.

Plus précisément, la présente invention a pour objet un ensemble pour chambre de combustion de turbomachine, comprenant :
- un bossage pour chambre de combustion de turbomachine, comprenant un corps tubulaire configuré pour s'insérer dans un orifice de réception ménagé dans une paroi annulaire d'un tube à flamme et pour accueillir une tige d'un axe de fixation du tube à flamme sur un carter externe, une première extrémité du bossage comprenant une collerette annulaire configurée pour bloquer une translation radiale du bossage dans un premier sens, et une deuxième extrémité du bossage étant configurée pour être sertie sur la paroi du tube à flamme de sorte à bloquer la translation radiale du bossage dans un deuxième sens, et
- un élément annulaire configuré pour s'agencer de manière coaxiale avec l'orifice de réception, et en contact radial avec la paroi annulaire du tube à flamme d'une part et avec la collerette annulaire du bossage d'autre part.

La présente invention a également pour objet une chambre de combustion de turbomachine, comprenant :
- un carter externe annulaire s'étendant selon un axe longitudinal,
- un tube à flamme agencé à l'intérieur du carter externe et comprenant une paroi annulaire s'étendant globalement selon l'axe longitudinal, la paroi comprenant au moins un orifice de réception agencé en regard du carter externe,
- au moins un axe de fixation du tube à flamme sur le carter externe comprenant une tige s'étendant à travers l'orifice de réception, et
- au moins un ensemble selon la revendication 1.

Préférentiellement, l'élément annulaire est soudé en un ou plusieurs points sur la paroi du tube à flamme.

Préférentiellement, l'élément annulaire est agencé contre une surface extérieure de la paroi du tube à flamme, et la deuxième extrémité est sertie contre une surface intérieure du tube à flamme.

Préférentiellement, l'élément annulaire présente une surface de contact avec la paroi du tube à flamme conformée à la forme de la paroi du tube à flamme.

Plus préférentiellement, l'élément annulaire comprend une collerette annulaire formant la surface de contact avec la paroi du tube à flamme, la collerette annulaire présentant un méplat destiné à indiquer à un opérateur l'orientation du galbe de la surface de contact de l'élément annulaire.

La présente invention a également pour objet une turbomachine comprenant une chambre de combustion telle que précédemment décrite.

L'invention a également pour objet un procédé pour la fabrication d'une chambre de combustion de turbomachine, comprenant un carter externe annulaire s'étendant selon un axe longitudinal, et un tube à flamme agencé à l'intérieur du carter externe comprenant une paroi annulaire s'étendant globalement selon l'axe longitudinal, le procédé comprenant les étapes de :
- perçage d'au moins un orifice de réception dans la paroi du tube à flamme en regard du carter externe,
- mise en place d'au moins un élément annulaire de manière coaxiale avec le ou l'un des orifices de réception contre la paroi du tube à flamme,
- insertion dans le ou les orifices de réception et le ou les éléments annulaires (39) associés d'un bossage comprenant à une première extrémité une collerette annulaire configurée pour bloquer une translation radiale du ou des bossages dans un premier sens, de sorte que la collerette annulaire (35) du ou des bossages (32) vienne en appui contre le ou les éléments annulaires (39), et
- sertissage de la deuxième extrémité du ou des bossages sur la paroi du tube à flamme, de sorte à bloquer la translation radiale du ou des bossages dans un deuxième sens.

Plus préférentiellement, le procédé comprend, après l'étape de sertissage du ou des bossages, une étape de soudure en un ou plusieurs points du ou des éléments annulaires à la paroi du tube à flamme.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 (déjà décrite) est une vue en coupe longitudinale d'une chambre de combustion selon l'art antérieur ;
- la figure 2 est une vue en coupe longitudinale d'une chambre de combustion selon un mode de réalisation de l'invention ;
- la figure 3 est une vue en coupe, en détail, d'un bossage d'un tube à flamme de la chambre de combustion représentée à la figure 2 ;
- la figure 4 est un organigramme d'un procédé de fabrication d'une chambre de combustion selon un mode de réalisation de l'invention ;
- les figures 5, 6 et 7 illustrent chacune une étape du procédé de fabrication représenté à la figure 4 ;
- la figure 8 est un organigramme d'un procédé de remplacement d'un bossage d'une chambre de combustion fabriquée selon le procédé représenté à la figure 4 ;
- les figures 9 et 10 illustrent chacune une étape du procédé représenté à la figure 8.

### DESCRIPTION DETAILLEE

La figure 2 représente une vue en coupe longitudinale d'une chambre de combustion 20 d'une turbomachine selon un mode de réalisation de l'invention.

La chambre de combustion 20 est connectée en amont à un compresseur (non représenté) qui alimente la chambre de combustion 20 en air sous pression par l'intermédiaire d'un diffuseur (non représenté), et en aval à un distributeur.

La chambre de combustion 20 est délimitée par un carter externe 21 annulaire s'étendant selon un axe longitudinal 23.

La chambre de combustion 20 comprend en outre un tube à flamme 24 muni d'une paroi 25 de forme globalement toroïdale s'étendant selon l'axe longitudinal 23. La paroi 25 est ménagée à distance du carter externe 21, de sorte à former un conduit annulaire d'alimentation en air.

Dans l'exemple illustré à la figure 2, le tube à flamme 24 est à écoulement inversé, et la paroi 25 présente une forme annulaire coudée permettant de renvoyer l'écoulement gazeux en aval de la turbomachine, en direction de la turbine. L'écoulement des gaz se fait alors successivement de l'aval vers l'amont puis à nouveau vers l'aval de la chambre de combustion 20. Les injecteurs sont alors généralement agencés au niveau de la tête du tube à flamme 24.

Selon une variante (non représentée), le tube à flamme est à écoulement direct, et comprend des parois annulaires de révolution réunies au niveau d'une extrémité amont par un fond et un carénage comportant des orifices de passage d'injecteurs de carburants portés par la chambre de combustion.

La chambre de combustion 20 comprend un axe de fixation 26 configuré pour relier la paroi 25 du tube à flamme 24 au carter externe 21.

Pour cela, l'axe de fixation 26 comprend une tige 27 s'étendant radialement dans un orifice traversant d'insertion 28 ménagé dans le carter externe 21, et dans un orifice traversant de réception 29 ménagé dans la paroi 25 du tube à flamme 24 en regard de l'orifice d'insertion 28, et une tête 30 disposée en butée contre une surface extérieure 31 du carter externe 21.

La chambre de combustion 20 comprend en outre un bossage 32 comprenant un corps tubulaire 33 s'étendant dans l'orifice de réception 29, et accueillant la tige 27 de l'axe de fixation 26. La tige 27 est montée coulissante dans le corps 33 du bossage 32, de sorte que, lorsque le tube à flamme 24 se dilate, le corps 33 du bossage 32 coulisse le long de la tige 27.

Le bossage 32 est par exemple en nickel, en cobalt ou en chrome.

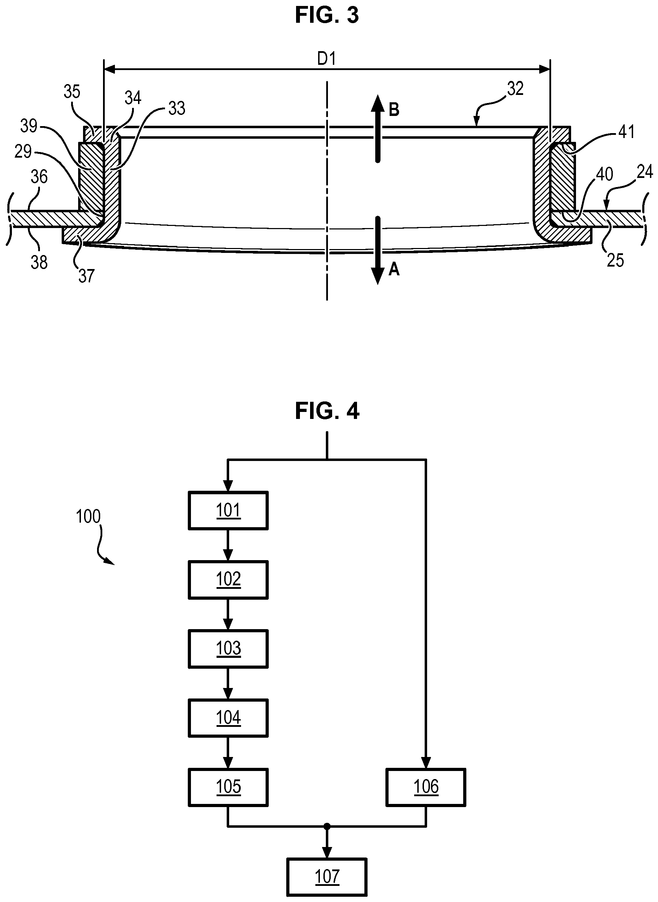

Le bossage 32 représenté à la figure 2 est montré en détail à la figure 3, avant mise en place de la tige 27 de l'axe de fixation 26 dans le bossage 32.

De préférence, un diamètre externe D1 du corps 33 du bossage 32 est sensiblement égal à un diamètre de l'orifice de réception 29 qui lui est associé.

Une première extrémité ouverte 34 du bossage 32 est formée d'une collerette annulaire 35 configurée pour bloquer une translation radiale du bossage relativement à l'axe longitudinal 23 dans un premier sens A, lorsque le bossage 32 est inséré dans l'orifice de réception 29 associé. Comme illustré à la figure 3, une surface externe du corps 33 du bossage 32 est par exemple raccordée à la collerette annulaire 35 par un congé, et une surface interne du corps 33 du bossage 32 est par exemple raccordée à la collerette annulaire 35 par un arrondi.

Dans l'exemple illustré aux figures 2 et 3, la collerette annulaire 35 du bossage 32 est agencée en regard d'une surface extérieure 36 de la paroi 25 du tube à flamme 24. Ainsi, la collerette annulaire 35 bloque la translation radiale du bossage 32 vers l'intérieur du tube à flamme 24.

Le bossage 32 comprend également, agencée à l'opposé de la collerette annulaire 35, une deuxième extrémité 37 sertie sur la paroi 25 du tube à flamme 24, de sorte à bloquer la translation radiale du bossage dans un deuxième sens B, opposé au premier sens A. La deuxième extrémité 37 est de préférence sertie sur la paroi 25 du tube à flamme 24 sur toute sa circonférence.

Dans l'exemple illustré à la figure 2, la deuxième extrémité 37 du bossage 32 est sertie contre une surface intérieure 38 du tube à flamme 24. Ainsi, le sertissage 37 du bossage 32 bloque la translation radiale du bossage 32 vers l'extérieur du tube à flamme 24.

De préférence, lorsqu'elle est sertie sur la paroi 25 du tube à flamme 24, la deuxième extrémité 37 du bossage est conformée à la forme de la paroi 25 du tube à flamme 24. Dans l'exemple présenté à la figure 3, la deuxième extrémité 37 du bossage 32 est galbée de sorte à épouser la concavité de la surface intérieure 38 de la paroi 25 du tube à flamme 24. Le bossage 32 ainsi monté dans l'orifice de réception 29 de la paroi 25 du tube à flamme 24 permet d'assurer un positionnement précis du tube à flamme 24 relativement au carter externe 21 sans qu'il soit nécessaire de le souder à la paroi 25 du tube à flamme 24.

La chambre de combustion 20 comprend en outre un élément annulaire 39 agencé de manière coaxiale avec l'orifice de réception 29 associé, en contact radial relativement à l'axe longitudinal 23 avec la paroi 25 du tube à flamme 24 d'une part, et avec la collerette annulaire 35 du bossage 32 d'autre part.

Ainsi, l'élément annulaire 39 permet d'une part de protéger la paroi 25 du tube à flamme 24 des efforts exercés sur le bossage 32 lors de son montage, et d'autre part de faciliter le sertissage de la deuxième extrémité 37 du bossage 32 sur la paroi 25 du tube à flamme 24.

L'élément annulaire 39 est par exemple en nickel, en cobalt ou en chrome.

Dans l'exemple présenté aux figures 2 et 3, l'élément annulaire 39 est agencé contre la surface extérieure 36 de la paroi 25 du tube à flamme 24.

L'élément annulaire 39 présente une surface de contact 40 avec la paroi 25 du tube à flamme 24. De préférence, la surface de contact 40 est conformée à la forme de la paroi 25 du tube à flamme 24. Dans l'exemple présenté à la figure 3, la surface de contact 40 présente une légère concavité de sorte à épouser la convexité de la surface extérieure 36 de la paroi 25 du tube à flamme 24.

Selon un mode de réalisation de l'invention, l'élément annulaire 39 comprend une collerette annulaire formant la surface de contact 40. La collerette annulaire de l'élément annulaire 39 présente par exemple un méplat destiné à indiquer à un opérateur l'orientation du galbe de la surface de contact 40 de l'élément annulaire 39. De cette manière, l'élément annulaire 39 peut être correctement positionné sur la paroi 25 du tube à flamme 24

L'élément annulaire 39 présente également une surface de butée 41 contre laquelle la collerette annulaire 35 du bossage 32 est en appui, bloquant ainsi la translation radiale du bossage 32 dans le premier sens A.

L'élément annulaire 39 présente avantageusement une surface latérale interne configurée pour épouser une surface latérale externe du corps 33 du bossage 32. Pour cela, un diamètre interne de l'élément annulaire 39 est sensiblement égal au diamètre externe D1 du corps 33 du bossage 32. Comme illustré à la figure 3, l'élément annulaire 39 peut également présenter un chanfrein entre la surface de butée 41 et la surface latérale interne, pour venir en regard du congé raccordant la surface latérale externe du corps 33 du bossage 32 à la collerette annulaire 35 et éviter ainsi le risque d'interférence entre la surface extérieure du corps 33 du bossage 32 et l'élément annulaire 39.

L'élément annulaire 39 est par exemple soudé en un ou plusieurs points sur la paroi 25 du tube à flamme 24, de sorte à conserver la position exacte du bossage 32. Un tel mode de réalisation est particulièrement avantageux en cas de remplacement du bossage 32 comme cela est expliqué plus loin dans la description.

La chambre de combustion 20 comprend avantageusement plusieurs axes de fixation 26 auxquels sont associés des orifices d'insertion 28, des orifices de réception 29, des bossages 32 et des éléments annulaires 39 tels que précédemment décrits. De préférence, les axes de fixation 26 sont agencés dans un plan P normal à l'axe longitudinal 23. Les axes de fixation 26 sont avantageusement répartis de manière équidistante dans le plan P autour du tube à flamme 24.

La fabrication 100 de la chambre de combustion 20 se déroule selon les étapes suivantes illustrées à la figure 4.

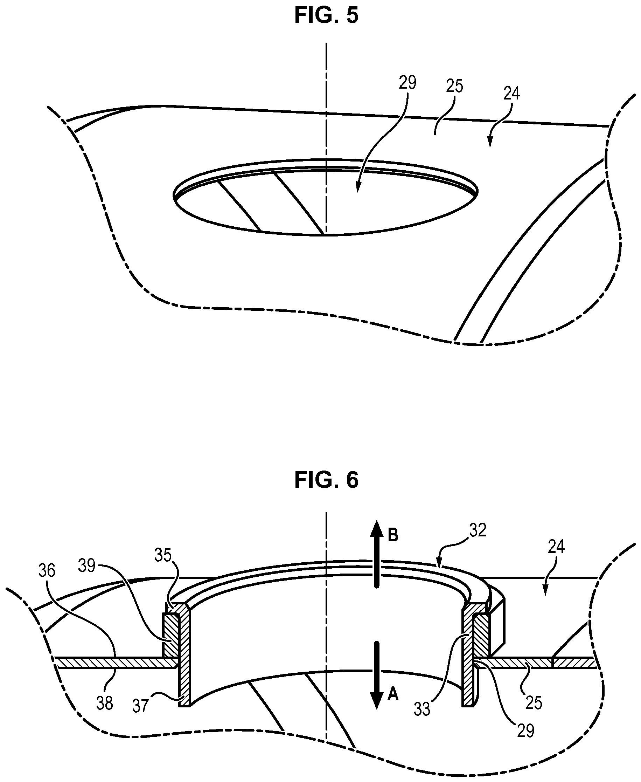

Au cours d'une première étape 101, l'orifice de réception 29 est percé dans la paroi 25 du tube à flamme 24 en regard du carter externe 20. La première étape 101 est par exemple illustrée à la figure 5.

Puis, lors d'une deuxième étape 102, l'élément annulaire 39 est positionné contre la paroi 25 du tube à flamme 24, de manière coaxiale avec l'orifice de réception 29.

Le bossage 32 est ensuite inséré dans l'élément annulaire 39 et l'orifice de réception 29, au cours d'une troisième étape 103. Le bossage 32 est inséré par la deuxième extrémité 37, de sorte que la collerette annulaire 35 vienne en appui contre la surface de butée 41 de l'élément annulaire 39 et bloque ainsi la translation radiale du bossage 32 dans le premier sens A. La troisième étape 103 est par exemple illustrée à la figure 6. Dans cet exemple, l'élément annulaire 39 est positionné contre la surface externe 25 de la paroi 25 du tube à flamme 24 et le bossage 32 est inséré dans l'orifice de réception 29 depuis l'extérieur du tube à flamme 24, de sorte que la collerette annulaire 35 bloque la translation radiale du bossage 32 vers l'intérieur du tube à flamme 24.

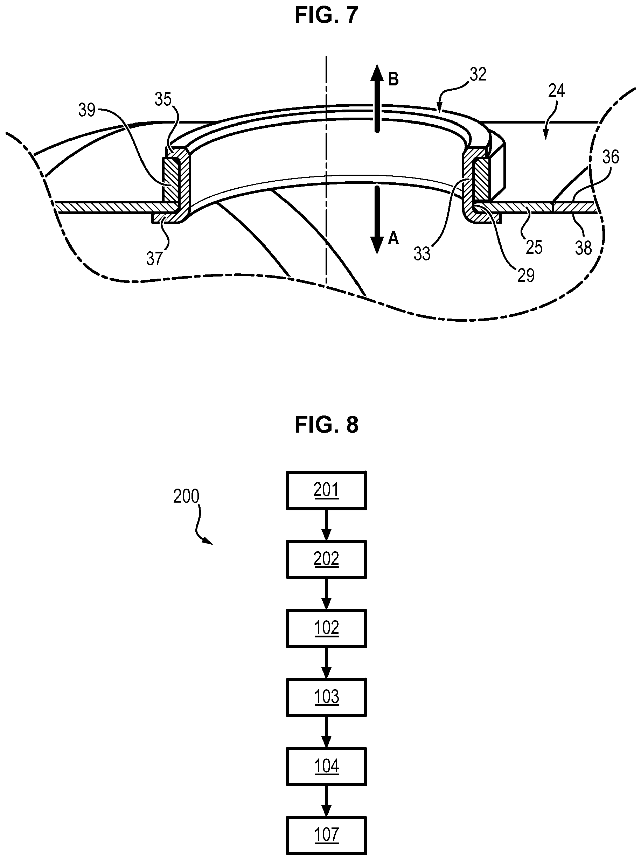

Puis, lors d'une quatrième étape 104, la deuxième extrémité 37 du bossage 32 est sertie sur la paroi 25 du tube à flamme 24, de sorte à bloquer la translation radiale du bossage 32 dans le deuxième sens B. La quatrième étape 104 est par exemple illustrée à la figure 7. Dans cet exemple, la deuxième extrémité 37 du bossage 32 est sertie contre la surface intérieure 38 de la paroi 25 du tube à flamme 24, de sorte que le sertissage 37 bloque la translation radiale du bossage 32 vers l'extérieur du tube à flamme 24.

Une fois le bossage 32 installé et serti sur la paroi 25 du tube à flamme 24, l'élément annulaire 39 est par exemple soudé en un ou plusieurs points à la paroi 25 du tube à flamme 24, au cours d'une cinquième étape 105. Dans l'exemple illustré aux figures 5 à 7, l'élément annulaire 39 est soudé à la surface extérieure 36 de la paroi 25 du tube à flamme 24.

Indépendamment des étapes 101 à 105, l'orifice d'insertion 28 est percé dans le carter externe 20 au cours d'une sixième étape 106, de sorte que l'orifice d'insertion 28 et l'orifice de réception 29 soient en regard l'un de l'autre. On entend par « indépendamment des étapes 101 à 105 », le fait que la sixième étape 106 peut aussi bien être réalisée avant, en parallèle, ou même après les étapes 101 à 104.

Enfin, au cours d'une septième étape 107, le tube à flamme 24 est positionnée à l'intérieur du carter externe 21 et la tige 27 de l'axe de fixation 26 est insérée d'abord dans l'orifice d'insertion 28, puis dans l'orifice de réception 29 et le bossage 32, jusqu'à ce que la tête 30 vienne en butée contre la surface externe 31 du carter externe 21, assurant ainsi un positionnement précis du tube à flamme 24 dans la chambre de combustion 20.

Les étapes 101 à 107 sont par exemple réalisées à plusieurs reprises ou en parallèle de sorte à positionner le tube à flamme 24 par l'intermédiaire de plusieurs axes de fixation 26 chacun associé à un orifice d'insertion 28, à un orifice de réception 29, à un bossage 32 et à un élément annulaire 39 de la manière précédemment décrite. De préférence, les orifices de réception 29 sont percés dans un plan P normal à l'axe longitudinal 23. Les orifices de réception 29 sont avantageusement répartis de manière équidistante dans le plan P autour du tube à flamme 24.

Le remplacement 200 d'un bossage usagé 32 préalablement monté sur la paroi 25 du tube à flamme 24 selon les étapes 102 à 104 préalablement décrites, se déroule selon les étapes suivantes illustrées à la figure 8.

Au cours d'une première étape 201, l'axe de fixation 26 est retiré de l'orifice d'insertion 28, de l'orifice de réception 29 et du bossage 32.

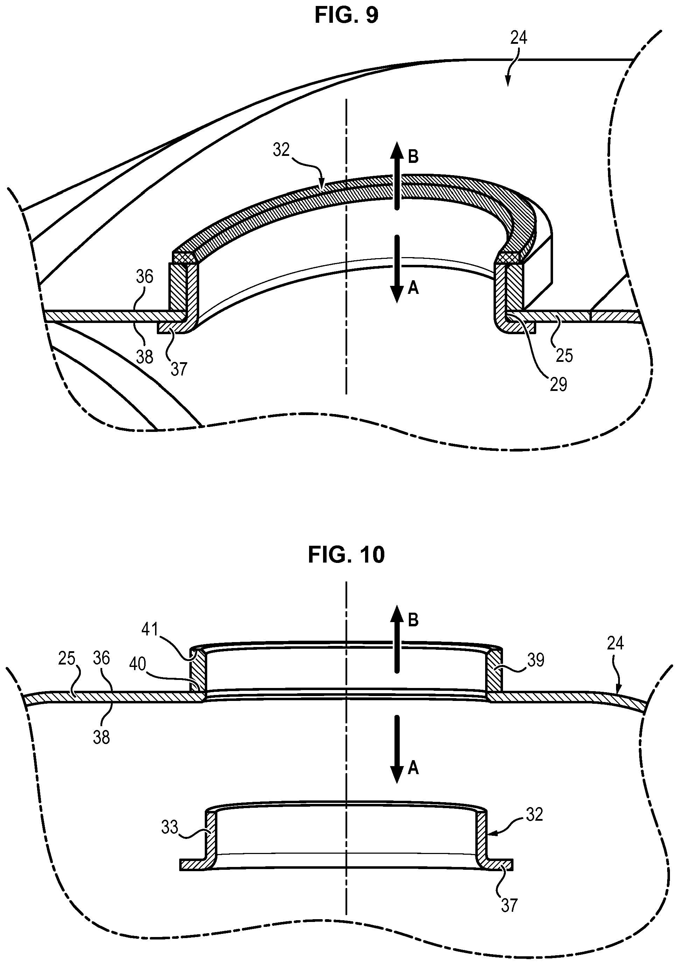

Puis, la collerette annulaire 35 du bossage 32 est retirée au cours d'une deuxième étape 202, de sorte que le bossage 32 se trouve libre de translater dans le premier sens A. La collerette annulaire 35 du bossage 32 est par exemple usinée par fraisage ou rectification. La deuxième étape 202 est par exemple illustrée à la figure 9. Dans cet exemple, le bossage 32 se trouve libre de translater vers l'intérieur du tube à flamme 24.

Le bossage 32 est ensuite retiré de l'élément annulaire 39 et de l'orifice de réception 29 dans le premier sens A, au cours d'une troisième étape 203. La troisième étape 203 est par exemple illustrée à la figure 10. Dans cet exemple, le bossage 32 est retiré de l'élément annulaire 39 et de l'orifice de réception 29 vers l'intérieur du tube à flamme 24.

Il n'est donc pas nécessaire de remplacer l'élément annulaire 39, lorsque le bossage 32 associé est usagé. On comprend alors qu'il est particulièrement avantageux, lors de la fabrication de la chambre de combustion 20, de souder en un ou plusieurs points l'élément annulaire 39 à la paroi 25 du tube à flamme 24, une fois le bossage 32 serti, de sorte à conserver le bon positionnement du tube à flamme 24 relativement au carter externe 21 malgré le remplacement du bossage 32.

Enfin, un nouveau bossage 32 est monté sur la paroi 25 du tube à flamme 24 conformément aux étapes 103 et 104, préalablement décrites, et l'axe de fixation 26 associé est réinséré dans le carter externe 21 et le bossage 32 conformément à l'étape 107 préalablement décrite.

La chambre de combustion 20 décrite ci-avant présente ainsi l'avantage de comprendre des bossages 32 qui se montent et se démontent facilement, à moindre coût, tout en assurant un positionnement précis du tube flamme 24 dans la chambre de combustion 20.

## Revendications

1. Ensemble pour chambre de combustion (20) de turbomachine, comprenant :
- un bossage (32) pour chambre de combustion (20) de turbomachine, comprenant un corps tubulaire (33) configuré pour s'insérer dans un orifice de réception (29) ménagé dans une paroi annulaire (25) d'un tube à flamme (24) et adapté pour accueillir une tige (27) d'un axe de fixation (26) du tube à flamme sur un carter externe (21), une première extrémité (34) du bossage comprenant une collerette annulaire (35) configurée pour bloquer une translation radiale du bossage dans un premier sens (A), et une deuxième extrémité (37) du bossage étant configurée pour être sertie sur la paroi (25) du tube à flamme (24) de sorte à bloquer la translation radiale du bossage dans un deuxième sens (B), et **caractérisé en ce qu'**il comprend en outre :
- un élément annulaire (39) configuré pour s'agencer de manière coaxiale avec l'orifice de réception (29), et en contact radial avec la paroi annulaire (25) du tube à flamme (24) d'une part et avec la collerette annulaire (35) du bossage (32) d'autre part.

2. Chambre de combustion (20) de turbomachine, comprenant :
- un carter externe (21) annulaire s'étendant selon un axe longitudinal (23),
- un tube à flamme (24) agencé à l'intérieur du carter externe et comprenant une paroi annulaire (25) s'étendant globalement selon l'axe longitudinal, la paroi comprenant au moins un orifice de réception (29) agencé en regard du carter externe,
- au moins un axe de fixation (26) du tube à flamme sur le carter externe comprenant une tige (27) s'étendant à travers l'orifice de réception, et
- au moins un ensemble selon la revendication 1.

3. Chambre de combustion (20) selon la revendication 2, dans laquelle l'élément annulaire (39) est soudé en un ou plusieurs points sur la paroi (25) du tube à flamme (24).

4. Chambre de combustion (20) selon l'une des revendications 2 ou 3, dans laquelle l'élément annulaire (39) est agencé contre une surface extérieure (36) de la paroi (25) du tube à flamme (24), et la deuxième extrémité (37) est sertie contre une surface intérieure (38) du tube à flamme (24).

5. Chambre de combustion (20) selon l'une des revendications 2 à 4, dans laquelle l'élément annulaire (39) présente une surface de contact (40) avec la paroi (25) du tube à flamme (24) conformée à la forme de la paroi (25) du tube à flamme (24).

6. Chambre de combustion (20) selon la revendication 5, dans laquelle l'élément annulaire (39) comprend une collerette annulaire formant la surface de contact (40) avec la paroi (25) du tube à flamme (24), la collerette annulaire présentant un méplat destiné à indiquer à un opérateur l'orientation du galbe de la surface de contact (40) de l'élément annulaire (39).

7. Turbomachine comprenant une chambre de combustion (20) selon l'une quelconque des revendications 2 à 6.

8. Procédé pour la fabrication d'une chambre de combustion (20) de turbomachine, comprenant un carter externe (21) annulaire s'étendant selon un axe longitudinal (23), et un tube à flamme (24) agencé à l'intérieur du carter externe comprenant une paroi annulaire (25) s'étendant globalement selon l'axe longitudinal, le procédé étant **caractérisé en ce qu'**il comprend les étapes de :
- perçage (101) d'au moins un orifice de réception (29) dans la paroi (25) du tube à flamme (24) en regard du carter externe (21),
- mise en place (102) d'au moins un élément annulaire (39) de manière coaxiale avec le ou l'un des orifices de réception (29) contre la paroi (25) du tube à flamme (24),
- insertion (103) dans le ou les orifices de réception (29) et le ou les éléments annulaires (39) associés d'un bossage (32) comprenant à une première extrémité (34) une collerette annulaire (35) configurée pour bloquer une translation radiale du ou des bossages dans un premier sens (A), de sorte que la collerette annulaire (35) du ou des bossages (32) vienne en appui contre le ou les éléments annulaires (39), et
- sertissage (104) de la deuxième extrémité (37) du ou des bossages (32) sur la paroi (25) du tube à flamme (24), de sorte à bloquer la translation radiale du ou des bossages dans un deuxième sens (B).

9. Procédé selon la revendication 8, comprenant, après l'étape de sertissage du ou des bossages (32), une étape de soudure (105) en un ou plusieurs points du ou des éléments annulaires (39) à la paroi (25) du tube à flamme (24).

## Patentansprüche

1. Anordnung für Brennkammer (20) einer Turbomaschine, umfassend:
- eine Ausbauchung (32) für Brennkammer (20) einer Turbomaschine, umfassend einen rohrförmigen Körper (33), der konfiguriert ist, um sich in eine Empfangsöffnung (29) einzufügen, die in einer ringförmigen Wand (25) eines Flammrohrs (24) ausgebildet und geeignet ist, einen Stab (27) einer Befestigungsachse (26) des Flammrohrs auf einem externen Gehäuse (21) zu empfangen, wobei ein erstes Ende (34) der Ausbauchung einen ringförmigen Kragen (35) umfasst, der konfiguriert ist, um eine radiale Verlagerung der Ausbauchung in eine erste Richtung (A) zu blockieren, und ein zweites Ende (37) der Ausbauchung konfiguriert ist, um auf der Wand (25) des Flammrohrs (24) derart gefasst zu sein, dass die radiale Verlagerung der Ausbauchung in eine zweite Richtung (B) blockiert ist, und **dadurch gekennzeichnet, dass** sie ferner umfasst:
- ein ringförmiges Element (39), das konfiguriert ist, um sich koaxial mit der Empfangsöffnung (29) und in radialem Kontakt mit der ringförmigen Wand (25) des Flammrohrs (24) zum einen und mit dem ringförmigen Kragen (35) der Ausbauchung (32) zum anderen auszubilden.

2. Brennkammer (20) einer Turbomaschine, umfassend:
- ein ringförmiges externes Gehäuse (21), das sich gemäß einer Längsachse (23) erstreckt,
- ein Flammrohr (24), das im Innern des externen Gehäuses ausgebildet ist und eine ringförmige Wand (25) umfasst, die sich allgemein gemäß der Längsachse erstreckt, wobei die Wand mindestens eine Empfangsöffnung (29) umfasst, die gegenüber dem externen Gehäuse ausgebildet ist,
- mindestens eine Befestigungsachse (26) des Flammrohrs auf dem externen Gehäuse, umfassend einen Stab (27), der sich durch die Empfangsöffnung erstreckt, und
- mindestens eine Anordnung nach Anspruch 1.

3. Brennkammer (20) nach Anspruch 2, wobei das ringförmige Element (39) an einem Punkt oder mehreren Punkten auf der Wand (25) des Flammrohrs (24) verschweißt ist.

4. Brennkammer (20) nach einem der Ansprüche 2 oder 3, wobei das ringförmige Element (39) gegen eine äußere Fläche (36) der Wand (25) des Flammrohrs (24) ausgebildet ist und das zweite Ende (37) gegen eine innere Fläche (38) des Flammrohrs (24) gefasst ist.

5. Brennkammer (20) nach einem der Ansprüche 2 bis 4, wobei das ringförmige Element (39) eine Kontaktfläche (40) mit der Wand (25) des Flammrohrs (24) aufweist, die an die Form der Wand (25) des Flammrohrs (24) angepasst ist.

6. Brennkammer (20) nach Anspruch 5, wobei das ringförmige Element (39) einen ringförmigen Kragen umfasst, der die Kontaktfläche (40) mit der Wand (25) des Flammrohrs (24) bildet, wobei der ringförmige Kragen eine Abflachung aufweist, die bestimmt ist, einem Bediener die Ausrichtung der Durchbiegung der Kontaktfläche (40) des ringförmigen Elements (39) anzuzeigen.

7. Turbomaschine, umfassend eine Brennkammer (20) nach einem der Ansprüche 2 bis 6.

8. Verfahren für die Herstellung einer Brennkammer (20) einer Turbomaschine, umfassend ein ringförmiges externes Gehäuse (21), das sich gemäß einer Längsachse (23) erstreckt, und ein Flammrohr (24), das im Innern des externen Gehäuses ausgebildet ist, umfassend eine ringförmige Wand (25), die sich allgemein gemäß der Längsachse erstreckt, wobei das Verfahren **dadurch gekennzeichnet ist, dass** es die folgenden Schritte umfasst:
- Bohren (101) mindestens einer Empfangsöffnung (29) in die Wand (25) des Flammrohrs (24) gegenüber dem externen Gehäuse (21),
- Platzieren (102) mindestens eines ringförmigen Elements (39) koaxial zu der oder einer der Empfangsöffnungen (29) gegen die Wand (25) des Flammrohrs (24),
- Einsetzen (103) in die Empfangsöffnung(en) (29) und wobei das oder die ringförmigen Elemente (39) mit einer Ausbauchung (32) an einem ersten Ende (34) einen ringförmigen Kragen (35) umfassen, der konfiguriert ist, um eine radiale Verlagerung der Ausbauchung(en) in eine erste Richtung (A) zu blockieren, so dass sich der ringförmige Kragen (35) der Ausbauchung(en) (32) auf dem oder den ringförmigen Elementen (39) abstützt, und
- Fassen (104) des zweiten Endes (37) der Ausbauchung (en) (32) auf der Wand (25) des Flammrohrs (24) derart, dass die radiale Verlagerung der Ausbauchung(en) in eine zweite Richtung (B) blockiert ist.

9. Verfahren nach Anspruch 8, umfassend, nach dem Schritt des Fassens der Ausbauchung(en) (32), einen Schritt des Verschweißens (105) an einem Punkt oder mehreren Punkten des oder der ringförmigen Elemente (39) auf der Wand (25) des Flammrohrs (24).

## Claims

1. An assembly for a turbine engine combustion chamber (20), comprising:
- a boss (32) for a turbine engine combustion chamber (20), comprising a tubular body (33) configured to be inserted into a reception port (29) provided in an annular wall (25) of a flame tube (24) and adapted to accommodate a stem (27) of an attachment pin (26) of the flame tube on an outer casing (21), a first end (34) of the boss comprising an annular collar (35) configured to block radial translation of the boss in a first direction (A) and a second end (37) of the boss being configured to be crimped to the wall (25) of the flame tube (24) so as to block radial translation of the boss in a second direction (B), and **characterized in that** it further comprises:
- an annular element (39) configured to fit coaxially with the reception port (29) and in radial contact with the annular wall (25) of the flame tube (24) on the one hand and with the annular collar (35) of the boss (32) on the other hand.

2. A turbine engine combustion chamber (20), comprising:
- an annular outer casing (21) extending along a longitudinal axis (23),
- a flame tube (24) arranged inside the outer casing and comprising an annular wall (25) extending generally along the longitudinal axis, the wall comprising at least one reception port (29) arranged facing the outer casing,
- at least one attachment pin (26) for the flame tube on the outer casing comprising a stem (27) extending through the reception port, and
- at least one assembly according to claim 1.

3. The combustion chamber (20) according to claim 2, wherein the annular element (39) is welded at one or more points to the wall (25) of the flame tube (24).

4. The combustion chamber (20) according to one of claims 2 or 3, wherein the annular element (39) is arranged against an outer surface (36) of the wall (25) of the flame tube (24), and the second end (37) is crimped against an inner surface (38) of the flame tube (24).

5. The combustion chamber (20) according to one of claims 2 to 4, wherein the annular element (39) has a contact surface (40) with the wall (25) of the flame tube (24) conforming to the shape of the wall (25) of the flame tube (24).

6. The combustion chamber (20) according to claim 5, wherein the annular element (39) comprises an annular collar forming the contact surface (40) with the wall (25) of the flame tube (24), the annular collar having a land intended to indicate to an operator the orientation of the contour of the contact surface (40) of the annular element (39).

7. The turbine engine comprising a combustion chamber (20) according to any one of claims 2 to 6.

8. A method for manufacturing a turbine engine combustion chamber (20) comprising an annular outer casing (21) extending along a longitudinal axis (23) and a flame tube (24) arranged inside the outer casing comprising an annular wall (25) extending generally along the longitudinal axis, the method being **characterized in that** it comprises the steps of:
- drilling (101) at least one reception port (29) in the wall (25) of the flame tube (24) facing the outer casing (21),
- installing (102) at least one annular element (39) coaxially with the or one of the reception ports (29) against the wall (25) of the flame tube (24),
- inserting (103) into the reception port(s) (29) and the associated annular element(s) (39) a boss (32) comprising at a first end (34) an annular collar (35) configured to block radial translation of the boss(es) in a first direction (A), so that the annular collar (35) of the boss(es) (32) bears against the annular element(s) (39), and
- crimping (104) the second end (37) of the boss(es) (32) to the wall (25) of the flame tube (24) so as to block radial translation of the boss(es) in a second direction (B).

9. The method according to claim 8 comprising, after the step of crimping the boss(es) (32), a step of welding (105) at one or more points of the annular element(s) (39) to the wall (25) of the flame tube (24).
